# EUROPEAN PATENT APPLICATION

(11) **EP 1 380 939 A1**
(43) Date of publication of application: **14.01.2004**
(21) Application number: 02405575.8
(22) Date of filing: 08.07.2002
(51) Int. Cl.: G06F 9/44

(54) **Version management for software object associations**

(71) Applicant: ABB RESEARCH LTD., 8050 Zürich (CH)
(72) Inventor: Naedele, Martin, 8048 Zürich (CH); Conticelli, Fabio, 91025 Marsala (IT); Shah, Anuj, Atlanta, GA 30308 (US); Yuen, Cherry, 5405 Baden-Dättwil (CH)
(74) Representative: ABB Patent Attorneys

(57) **Abstract**

In a method and computer program for version management for software object associations in a data processing system, said data processing system comprising a plurality of software objects (A, B, B', B", C), wherein at least one client object (A) refers, through an object reference (2;2';2"), to a target object (B;B';B") belonging to a target object category (B,B',B"), and where a frozen version and a modified version of the target object exist, at least three versions of the target object (B;B';B") exist.
The method comprises the steps of
- storing version information (VP) that specifies a target object (B;B';B") of the target object category (B,B',B"), and associating said version information (VP) with the client object (A),
- the client object (A) requesting a reference to the target object (B;B';B"), and
- providing to the client object (A), in accordance with the stored version information (VP), a reference to a version of the target object (B;B';B").

As a result, it becomes possible to maintain an association of the client object (A) with any of a plurality of target objects (B;B';B"). It also becomes possible to freeze a relation by permanently causing the reference to refer to a specific target object (B;B';B") and to unfreeze a relation by having the reference refer to a most current target object (B").

## Description

### Field of the Invention

The invention relates to object oriented computer systems, and more specifically to a method, computer program and apparatus for version management for software object associations as described in the preamble of claims 1, 9 and 10, respectively.

### Background of the Invention

In an object oriented software architecture, functionality and data are encapsulated inside objects. In order to execute functionality, associations between object instances are set up at design-time, or at application start-up time or at run-time. Object instances invoke methods on each other through these associations, i.e. a client object refers to and/or invokes a target object. There are situations where the target object instance of such an association is not constant over the lifecycle of the application but undergoes changes, and where these changes should be transparent to the client object. US 6,209,128 B1 describes a method for providing access to multiple object versions, in which a system user may select and access different versions of a given object. According to said selection, client objects then refer to either an earlier version or to an updated version of the object. In the first case, the relation to the object is said to be "frozen".

### Description of the Invention

It is an object of the invention to create a method, computer program and apparatus for version management for software object associations of the type mentioned initially, which enhances the functionality of the version management methods as known in the state of the art.

These objects are achieved by a method, computer program and apparatus for version management for software object associations according to the claims 1, 9 and 10.

In the inventive method for version management for software object associations in a data processing system, said data processing system comprising a plurality of software objects, wherein at least one client object refers, through an object reference, to a target object belonging to a target object category, and where a frozen version and a modified version of the target object exist, there exist at least three versions of the target object, and the method comprises the steps of
- storing version information that specifies a target object of the target object category, and associating said version information with the client object,
- the client object requesting a reference to the target object,
- providing to the client object, in accordance with the stored version information, a reference to a version of the target object.

As a result, it becomes possible to maintain an association of the client object with any of a plurality of target objects. It also becomes possible to freeze a relation by causing the reference to refer permanently to a specific target object, or to unfreeze a relation by having the reference refer to a most current target object.

The computer program for version management for software object associations according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

The apparatus for the version management for software object associations according to the invention comprises a data processor, a memory coupled to the processor and computer program code means stored in said memory, where said computer program code means, when executed by the processor, causes the method according to the invention to be executed.

Further preferred embodiments are evident from the dependent patent claims.

### Brief Description of the Drawings

The subject matter of the invention will be explained in more detail in the following text with reference to preferred exemplary embodiments, which are illustrated in the attached drawings, in which:
- Figure 1: schematically shows relations between a client object and several subsequent versions of a target object;
- Figure 2: schematically shows relations between a client object and several categories of target objects; and
- Figure 3: schematically shows relations between a client object and several alternative versions of a target object.

The reference symbols used in the drawings, and their meanings, are listed in summary form in the list of reference symbols. In principle, identical parts are provided with the same reference symbols in the figures.

### Detailed Description of Preferred Embodiments

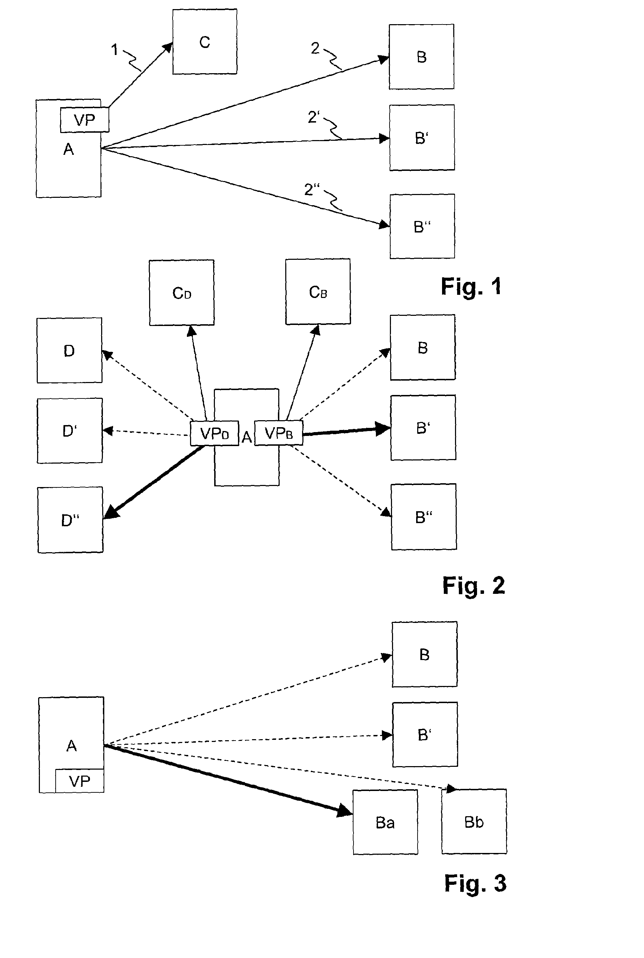

Figure 1 schematically shows relations between a client object A and several successively developed versions B,B',B" of a target object. Said versions are e.g. generated over time, as algorithms and/or parameters of the target object are refined and changed. The different versions B,B',B" of the target object belong to a common object category in the sense that they have the same or a compatible interface with respect to other objects referencing them . The different versions B,B',B" exist as instantiated objects in an object oriented computing environment.

The different versions may differ in their parameters, as is the case e.g. for different instances of an object class according to the Object Oriented Programming (OOP) paradigm. However, according to the invention, also the algorithmic implementation of methods provided by the objects may differ.

The methods of the target object B,B',B" are invoked by the client object A . For this purpose, the client object A must obtain a reference to the target object B,B',B". This is done, according to the invention, in the following way: The client object A does not store a direct reference to a specific target object B;B';B" but rather version information VP (version pointer). The version information VP comprises information denoting, for at least one category of target objects, a specific target object B;B';B" and whether the reference to the target object category is in a frozen or an unfrozen state. The information denoting the target object version is, for example, a character string and/or a version number or a path in an object oriented (OO) system with a name server, or a globally unique ID (GUID) in a MS Windows based system, etc.... In a first preferred embodiment of the invention, the version information VP is implemented as an attribute of the client A. In a second preferred embodiment of the invention, the version information VP is implemented as a separate instantiated object, which encapsulates both the reference to a version manager C, the "frozen/unfrozen" flag, a frozen target reference, if necessary, and an algorithmic behaviour of retrieving a reference to the target object from frozen internal information or from a version manager C, also according to additional discriminants for selecting among alternative versions of a target object.

For a further target object category D,D',D", further version information is associated with and/or stored in the client object A. In a preferred embodiment of the invention, a version manager C handles the version information for all target object categories. When the client object A needs to access a method provided by a category of versioned target objects, then the client object A invokes or calls 1 an appropriate method of the version manager C and submits, in said call, the version information VP associated with the category of the versioned target object. The version manager C returns to the client object A a reference 2,2',2" to a specific version B;B';B" of the target object. In another preferred embodiment of the invention, the version information VP is encapsulated as an object of its own, and
- either, when representing a frozen relation, returns a reference 2,2',2" to B' directly,
- or, when representing an unfrozen relation, calls the version manager C to obtain the current reference 2" to the current version B".

In this embodiment, the client object A only knows the interface to the version information VP, and never gets in direct contact with the version manager C. The reference 2,2',2" is a pointer or an object name etc, as stated above. It allows the client object A, within the object oriented programming environment, to invoke program routines or methods that are provided by the referenced target object.

The reference 2,2',2" is determined according to the following rules:
- If the version information VP indicates that the relation to the target object category is in an unfrozen state, then a reference 2" to the most recent or current version of the target object B" is returned to A, e.g. after obtaining it from the version manager C.
- If the version information VP indicates a frozen state, then a reference to the target object B,B' as specified by the version information VP is returned to A, e.g. without involving C.

Therefore, in the unfrozen state, the client object A automatically receives a reference to the most recent target object B", without having to keep track of updates to the target object category. New versions of the target object may be implemented without a need for notifying the client object A. New versions are registered, e.g. at runtime, by the version manager C through a callback mechanism. The callback mechanism causes an object management system to notify the version manager C when new versions of a specific category are introduced into the OO system.

Transitions between the frozen and unfrozen state are caused by user commands or by a supervisory version management system. They are managed in the following way:
- When the client object A or a corresponding version information object VP, respectively, receives a command to freeze the relation to a given category of target objects, then information for identifying the current target object version of said category is stored in the version information VP, together with e.g. a flag indicating the frozen state. As a result, the version information (VP) is set to refer to the version of the target object which is current at the time of the freeze command, until the next unfreeze command is received,
- When the client object A or the corresponding version information object VP, respectively, receives an unfreeze command, the flag is set to indicate the unfrozen state.

Figure 2 schematically shows relations between a client object and several categories of target objects, where further target objects D,D',D" form a second category. The client object A in this example carries two sets of version information VP, one for the targets B and for the targets D respectively. Each of these sets of version information VP_{B} and VP_{D} are associated with a respective version manager C_{B} and C_{D}. Figure 2 illustrates a case in which a relation to one category B,B',B" is frozen and a relation to a further category D,D',D" is unfrozen, with D" being the most recent or current version its category. The references returned by the version manager for this case are denoted by thick drawn out lines.

Figure 3 schematically shows relations between a client object and several alternative versions of a target object. Alternative versions are associated with a specific type of application of a software system incorporating the client object A and target objects. Such a specific type is determined, in a preferred embodiment of the invention, by a country, in which the application shall be used, or by a type of technology, a user language, a customer, a subcontractor etc. According to such a type, different parameters and/or algorithms may be used in at least some objects. For example, there may be different ways for computing costs, generating reports, connecting to an ordering system, etc. Alternative target objects Ba,Bb are selected by having the version information VP comprise at least one parameter that specifies an alternative. The version manager C returns a reference to the alternative Ba;Bb as specified. In a preferred embodiment of the invention, there exists a default alternative target object that is returned whenever no alternative is specified and/or when a specified alternative does not exist. This is done, for example, by finding the most recent version for which there is either a match between the discriminant parameter value in VP and the corresponding field value in the database of available versions, or where the corresponding field value in the version database is marked as generic.

In a preferred embodiment of the invention, a freeze or unfreeze command received by a client object A is forwarded to other objects referred to by the client object A. For example, the target objects are themselves client objects with respect to other objects. The freeze or unfreeze command is thus propagated through object dependencies, which e.g. take the form of an object hierarchy.

For example, an object-oriented software according to the invention could implement an object model of a product such as a power plant or a technical installation or a technical process. The object model is used e.g. in a sales configurator. Each domain object instance representing a subsystem of the product is associated with a configurator object instance that encapsulates configuration and costing algorithms in the sense of a strategy pattern. While working on a configuration, and for each new configuration, the user wants to access the most recent version of the configurator object instance that matches attributes like destination country, or specific technology used. Once the project is sold the configuration associations are frozen and saved for reference and archiving purposes. In this case on later examination the user wants to work with the original, i.e. "old" algorithms, not with the most recent version, in order to be able to follow the line of reasoning of the original configurator user. However, an old configuration may be needed to be reused as base for a new product configuration, in which case it will be necessary to upgrade the associations of the configuration object instances (or copies of the object graph) to the most recent version of the configurator versions, by unfreezing all or some associations.

### List of designations

- 1: call to version manager
- 2,2',2": reference to target object (A/VP holds only one at a time)
- A: client object
- B,B',B": target objects, successively developed
- Ba,Bb: alternative target objects
- C: version manager
- D,D',D": further target object

## Claims

1. A method for version management for software object associations in a data processing system, said data processing system comprising a plurality of software objects (A, B, B', B", C), wherein at least one client object (A) refers, through an object reference (2;2';2"), to a target object (B;B';B") belonging to a target object category (B,B',B"), and where a frozen version and a modified version of the target object exist,
**characterized in that** at least three versions of the target object (B;B';B") exist, and that the method comprises the steps of
• storing version information (VP) that specifies a target object (B;B';B") of the target object category (B,B',B"), and associating said version information (VP) with the client object (A),
• the client object (A) requesting a reference to the target object (B;B';B"), and
• providing to the client object (A), in accordance with the stored version information (VP), a reference (2;2';2") to a version of the target object (B;B';B").

2. Method according to claim 1, wherein the version information (VP) specifies one of a sequence of successively developed target objects (B,B',B").

3. Method according to claim 1 or 2, wherein the version information (VP) specifies one of a set of alternative target objects (Ba,Bb), where each target object is associated with a specific type of application of a software system comprising the client object (A) and the specified target object.

4. Method according to claims 1 to 3, wherein the version information (VP) specifies either, in a frozen state, one of a plurality of frozen versions of the target object (B;B') or, in an unfrozen state, a current version of the target object (B"), and that, in the unfrozen state, in the step of providing to the client object (A) a reference to the target object (B") a reference to the most current version of the target object (B") is provided.

5. Method according to claim 4, wherein, upon receiving a freeze command, the version information (VP) is set to refer to the current version of the target object, and a flag associated with the version information (VP) is set to indicate the frozen state.

6. Method according to claim 4, wherein, upon receiving an unfreeze command, the version information (VP) is set to refer to the current version of the target object, and a flag associated with the version information (VP) is set to indicate the unfrozen state.

7. Method according to claim 4, wherein a freeze or unfreeze command received by a client object (A) is forwarded to other objects referred to by the client object (A).

8. Method according to claim 1, wherein a version manager software entity (C;C_{B};C_{D}) is associated with a target object category (B,B',B"; D,D',D"), and encapsulates functions for implementing the steps of
• registering the existence of a new member of a target object category (B,B',B"; D,D',D") through a callback mechanism,
• receiving at least one parameter for specifying a member of the associated target object category (B,B',B"; D,D',D"), and
• returning a reference (2;2';2") to said specified member (B;B';B"; D;D';D") of the target object category (B,B',B"; D,D',D").

9. Computer program for version management for software object associations which is loadable and executable on a data processing unit and which computer program, when being executed, executes the method according to one of the claims 1 to 8.

10. Apparatus for the version management for software object associations, comprising a data processor, a memory coupled to the processor and computer program code means stored in said memory, where said computer program code means, when executed by the processor, performs the steps according to one of claims 1 to 8.
